**Europäisches Patentamt**

**European Patent Office**

**Office européen des brevets**

(19)

(11) Veröffentlichungsnummer: **0 151 731 B1**

(12) **EUROPÄISCHE PATENTSCHRIFT**

(51) Int. Cl.⁴: **A 01 D 23/02,** A 01 D 33/02, A 01 D 33/06

(45) Veröffentlichungstag der Patentschrift:
**26.10.88**

(21) Anmeldenummer: **84114965.1**

(22) Anmeldetag: **08.12.84**

(54) **Rübenerntemaschine.**

(30) Priorität: **15.02.84 DE 3405321**

(43) Veröffentlichungstag der Anmeldung:
**21.08.85 Patentblatt 85/34**

(45) Bekanntmachung des Hinweises auf die Patenterteilung:
**26.10.88 Patentblatt 88/43**

(84) Benannte Vertragsstaaten:
**AT BE CH DE FR GB LI NL**

(56) Entgegenhaltungen:
**DE - A - 2 818 294**
**DE - A - 2 951 428**
**DE - U - 8 222 873**

(73) Patentinhaber: **Maschinenbau Harsewinkel, Gugenhan GmbH & Co. KG, Brockhägerstrasse 81, D-4834 Harsewinkel 1 (DE)**

(72) Erfinder: **Hummel, Heinrich, Am Schulkreuz 66, D-4834 Harsewinkel (DE)**

## Beschreibung

Die Erfindung bezieht sich auf eine Rübenerntemaschine mit einer Rübenköpf- und Rodeeinrichtung und einer das Blatt der geköpften Rüben quer zur Fahrtrichtung fördernden Sammelschnecke, an deren Abgabeende sich ein Übergabegehäuse anschliesst, in dem Übergabeförderer vorhanden sind, an die sich ein quer zur Fahrtrichtung erstreckender, oberhalb der Maschine angeordneter Ladeförderer anschliesst.

Bei einer bekannten Rübenerntemaschine, wie sie beispielsweise in dem DBGM 8 222 873 beschrieben ist, besteht die Möglichkeit, das gehäckselte Blattgut über einen Endlosförderer einem Fahrzeug zuzuführen oder es freifallend vom Förderer aus zu einem Schwad zu einer Seite hin abzulegen. Ferner ist eine Rübenerntemaschine bekannt, bei der das Häckselgut von einer Sammelschnecke einem Endlosförderer, oder nach Abbau desselben einer um eine horizontale Achse rotierenden Streuvorrichtung übergeben wird (DE PS 2 654 451 und DE OS 2 937 791).

Für beide Arten des Abtransportes ist hierbei die jeweilige Fördereinrichtung im Bereich des Abgabeendes der Sammelschnecke zusätzlich an das eigentliche Maschinengestell angehängt, wodurch die Erntemaschine eine für den Strassentransport unzulässige Gesamtbreite erhält.

Umfangreiche zeitraubende Umbauarbeiten zwischen Feld- und Transportbetrieb sind unumgänglich. Die Praxis hat gezeigt, dass insbesondere beim Anroden eines Feldes entlang seiner Grenzen oder beim Fahren in den vollen Bestand es wünschenswert ist, dass das Häckselgut an der einen oder anderen Maschinenlängsseite abgelegt, einem Ladeförderer zugeführt oder breit ausgestreut werden kann.

Aufgabe der Erfindung ist es also, eine Rübenerntemaschine so auszurüsten, dass wahlweise alle vorgenannten Möglichkeiten des Abtransportes des Blattgutes bei Berücksichtigung zumutbarer Umbauarbeiten und unter Einhaltung der zulässigen Gesamtbreite an der Maschine gegeben sind.

Erfindungsgemäss wird dies bei einer Rübenerntemaschine der eingangs beschriebenen Art dadurch gelöst, dass sich der Sammelschnecke in bekannter Weise ein Übergabegehäuse für das Häckselgut anschliesst, was dadurch gekennzeichnet ist, dass die dem Abgabeende der Sammelschnecke gegenüberliegende Wandung des Übergabegehäuses lösbar mit den mit ihr korrespondierenden Wänden verbunden ist und dass die Übergabeförderer im bodenseitigen Bereich des Übergabeförderers mit ihren Antriebsnaben über Kupplungen verbunden und gegen Streuwalzen austauschbar sind, um das Häckselgut wahlweise breitzustreuen, im Schwad abzulegen oder einem Begleitfahrzeug zuzuführen.

Bei einer bevorzugten Ausführungsform ist die Wandung des Übergabegehäuses an einer ihrer Kanten drehbar, sowie verriegelbar mit den mit ihr korrespondierenden Wänden des Übergabegehäuses verbunden.

In vorteilhafter Weise sind dabei die Verriegelungselemente so ausgebildet, dass sie bei eventuell auftretendem Überdruck im Innern des Übergabegehäuses selbstlösend die Wandung freigeben, so dass das angestaute Häckselgut auf kürzestem Wege zum Feld hinabgeworfen wird. Durch das Entfernen der Wandung kann durch die freigegebene Öffnung im Übergabegehäuse das Häckselgut so austreten, dass es im Schwad seitlich der Maschine abgelegt oder breitverteilt wird. Um dabei eine möglichst gute Streuwirkung zu erzielen, weisen die Streuwalzen über ihre gesamte Wirklänge wendelförmige Mitnehmer auf. Um eventuell unterschiedlichem Häckselgut zu entsprechen, können die Streuwalzen auch mit über ihre Länge verteilt angeordnete starre Zinken oder schlegelartige Mitnehmer versehen sein.

Mit einer derart ausgerüsteten Rübenerntemaschine kann das Häckselgut wie in dem vorgenannten Gebrauchsmuster beschrieben, über den Endlosförderer im Schwad abgelegt oder verladen werden, oder an der gegenüberliegenden Maschinenseite durch das offene Übergabegehäuse schwadgelegt, sowie von dort aus von Streuwalzen breitverteilt werden.

Die Erfindung wird nachstehend anhand mehrerer Zeichnungsfiguren näher erläutert.

Es zeigen:

Fig. 1 eine perspektivische Durchdringungszeichnung;

Fig. 2 eine teilweise Draufsicht ohne Endlosförderer;

Fig. 3 einen Teilschnitt nach III–III der Fig. 2;

Fig. 4 eine Draufsicht zu Fig. 3.

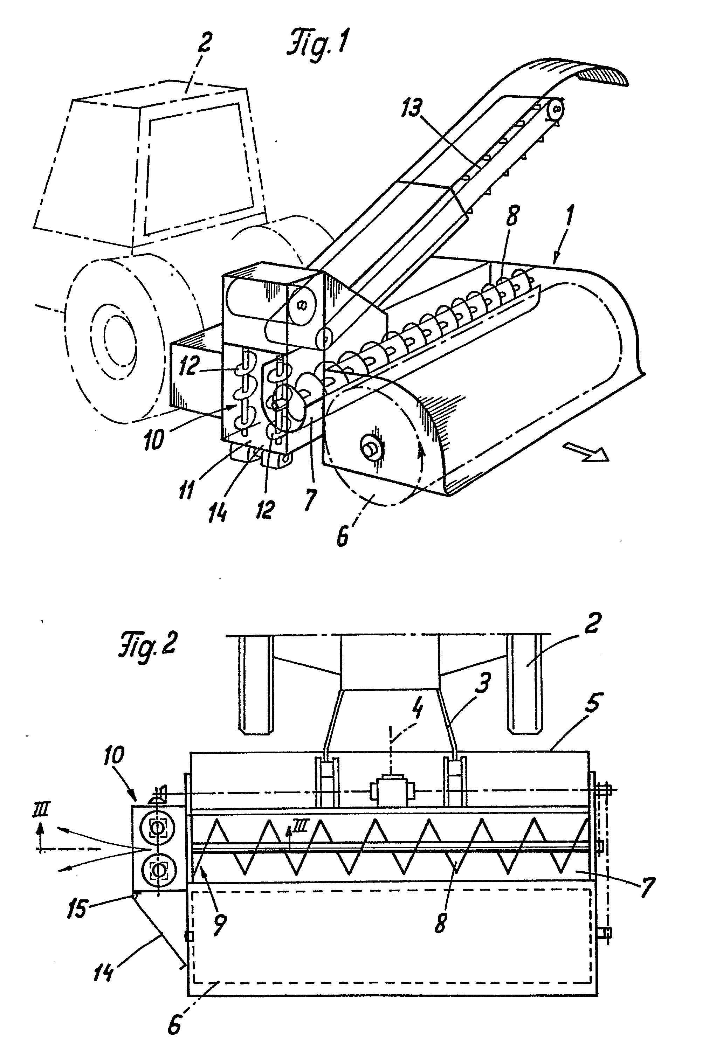

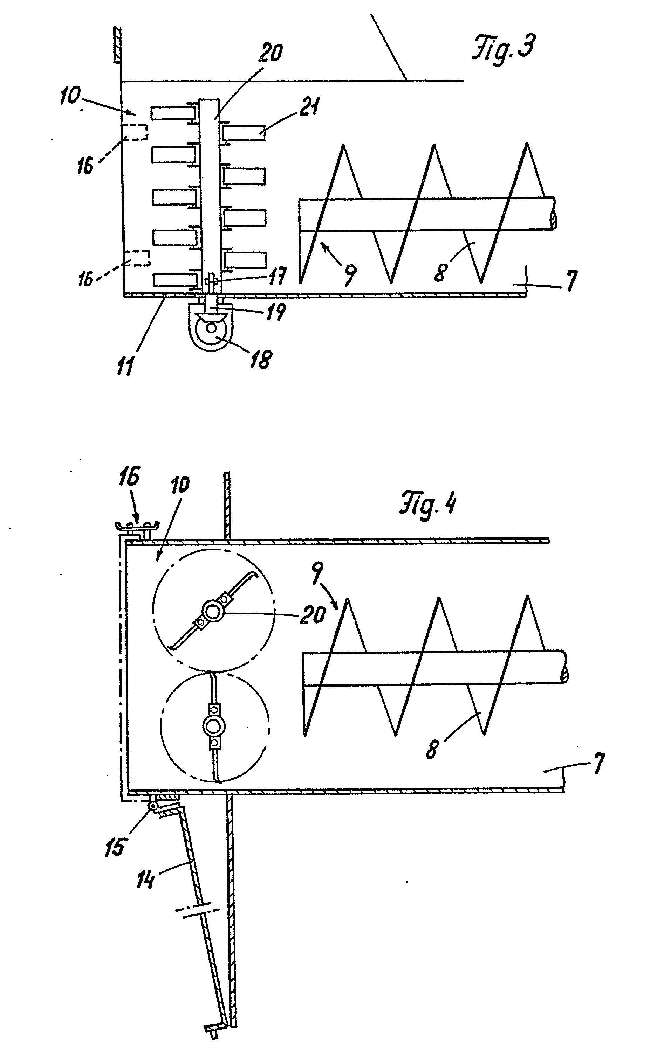

Mit 1 ist eine an einem Schlepper 2 anbaubare Rübenerntemaschine bezeichnet, die mit der Dreipunkteinrichtung 3 des Schleppers verbunden ist und die von der Schlepperzapfwelle 4 angetrieben wird. Der Grundrahmen 5 der Anbaumaschine trägt die für eine Rübenerntemaschine typischen Arbeitswerkzeuge. Wie insbesodnere die Zeichnungsfiguren 1 und 2 zeigen, wird das Blattgut von dem Schlegelhäcksler 6 in eine quer zur Fahrtrichtung verlaufende Rinne 7 geschleudert in der eine Sammelschnecke 8 gelagert ist. Dem abgabeseitigen Ende 9 der Förderschnecke 8 schliesst sich ein Übergabegehäuse 10 an in dessen Bodenwandung 11 sich vertikal angeordnete Übergabeförderer in Form von Förderschnecken 12 abstützen (Fig. 1). Für den Fall, dass das Häckselgut über den Endlosförderer 13 abgeführt werden soll, wird es von den Förderschnecken 12 an den Förderer 13 übergeben, und somit einem Ladefahrzeug zugeführt oder zum Boden hin als Schwad abgelegt. Die dem abgabeseitigen Ende 9 der Sammelschnecke 8 gegenüberliegende Wand 14 des Übergabegehäuses 10 ist mit einer seiner Seiten über Scharniere 15 mit dem Übergabegehäuse 10 schwenkbar verbunden und in geschlossener Stellung (Fig. 4) mittels einer oder mehrerer Verriegelungen 16 gesichert. Die Verriegelungselemente 16 sind dabei in bekannter Weise selbstlösend ausgebildet, um die Wandung 14 bei evtl. Verstopfungen im Übergabegehäuse freizugeben, damit das Häckselgut zum Feld hin abgegeben werden kann. Die Förderschnecken 12 sind an ihren Antriebsenden über Kupplungen 17 (Fig. 3) mit ihren Antriebsnaben 19 der Winkelgetriebe 18 verbunden.

In den Zeichnungsfiguren 3 und 4 sind die als Übergabeförderer bestimmten Förderschnecken 12 gegen Streuwalzen 20 ausgetauscht, an deren Umfang beispielsweise schlegelartige Mitnehmer 21 angeordnet sind. Der gewünschten Streuwirkung entsprechend können diese Mitnehmer auch wendelförmig oder als starre Zinken ausgebildet sein.

**Patentansprüche**

1. Rübenerntemaschine mit einer Rübenköpf- und Rodeeinrichtung und einer das Blatt der geköpften Rüben quer zur Fahrtrichtung fördernden Sammelschnecke (8), an deren Abgabeende (9) sich ein Übergabegehäuse (10) anschliesst, in dem Übergabeförderer (12) vorhanden sind, an die sich ein quer zur Fahrtrichtung erstreckender, oberhalb der Maschine angeordneter Ladeförderer (13) anschliesst, dadurch gekennzeichnet, dass die dem Abgabeende (9) der Sammelschnekke (8) gegenüberliegende Wandung (14) des Übergabegehäuses (10) lösbar mit den mit ihr korrespondierenden Wänden des Übergabegehäuses (10) verbunden ist und dass die Übergabeförderer (12) im bodenseitigen Bereich des Übergabegehäuses (10) mit ihren Antriebsnaben (19) über Kupplungen (17) verbunden und gegen Streuwalzen (20) austauschbar sind, um das Häckselgut wahlweise breitzustreuen, im Schwad abzulegen oder einem Begleitfahrzeug zuzuführen.

2. Rübenerntemaschine nach Anspruch 1, dadurch gekennzeichnet, dass die Wandung (14) einseitig drehbar, sowie verriegelbar mit den mit ihr korrespondierenden Wänden des Übergabegehäuses (10) verbunden ist.

3. Rübenerntemaschine nach den Ansprüchen 1 und 2, dadurch gekennzeichnet, dass die Verriegelungselemente (16) bei Überdruck im Übergabegehäuse (10) selbstlösend die Wandung freigeben.

4. Rübenerntemaschine nach Anspruch 1, dadurch gekennzeichnet, dass die oberen Enden der Übergabeförderer (12) bzw. der Streuwalzen (20) fliegend angeordnet sind.

5. Rübenerntemaschine nach den Ansprüchen 1 und 4, dadurch gekennzeichnet, dass die Streuwalzen (20) auf ihrer gesamten Länge wendelförmige Mitnehmer aufweisen.

6. Rübenerntemaschine nach den Ansprüchen 1 und 4, dadurch gekennzeichnet, dass die Streuwalzen (20) auf ihrer gesamten Länge verteilt zinkenartige Mitnehmer (21) aufweisen.

7. Rübenerntemaschine nach den Ansprüchen 1 und 4, dadurch gekennzeichnet, dass die Streuwalzen auf ihrer gesamten Länge verteilt schlegelartige Mitnehmer (21) aufweisen.

**Claims**

1. A beet harvesting machine comprising a beet topping and lifting device and a collecting screw (8) which conveys the leaf of the topped beets transversely with respect to the direction of travel and whose discharge end (9) communicates with a transfer housing (10) in which there are disposed transfer conveyors (18) which communicate with a loading conveyor (13) which extends transversely with respect to the direction of travel and which is arranged above the machine characterised in that the wall (14) of the transfer housing (10) which is in opposite relationship to the discharge end (9) of the collecting screw (8) is releasably connected to the walls of the transfer housing (10) corresponding thereto and that the transfer conveyors (12) are connected in the floor region of the transfer housing (10) to their drive hubs (19) by way of couplings (17) and are interchangeable for scattering rollers (20) in order selectively to scatter the chopped material wide, to deposit it in a swathe or to feed it to an accompanying vehicle.

2. A beet harvesting machine according to claim 1 characterised in that the wall (14) is connected at one side rotatably and lockingly to the walls corresponding thereto of the transfer housing (10).

3. A beet harvesting machine according to claims 1 and 2 characterised in that the locking elements (16) release the wall in a self-releasing manner in the event of an increased pressure in the transfer housing (10).

4. A beet harvesting machine according to claim 1 characterised in that the upper ends of the transfer conveyors (12) or the scattering rollers (20) are arranged in cantilever relationship.

5. A beet harvesting machine according to claims 1 and 4 characterised in that the scattering rollers (20) have entrainment members of a helical configuration over their entire length.

6. A beet harvesting machine according to claims 1 and 4 characterised in that the scattering rollers (20) have prongs-like entrainment members (21) distributed over their entire length.

7. A beet harvesting machine according to claims 1 to 4 characterised in that the scattering rollers have stick-like entrainment members (21) distributed over their entire length.

**Revendications**

1. Récolteuse de betteraves comprenant un dispositif décolleteur et arracheur, ainsi qu'une vis sans fin collectrice (8) qui achemine les feuilles des betteraves décolletées perpendiculairement à la direction du déplacement, et à l'extrémité délivreuse (9) de laquelle se raccorde un carter de transfert (10) dans lequel sont prévus des convoyeurs de transfert (12) auxquels se raccorde un convoyeur de chargement (13) s'étendant perpendiculairement à la direction du déplacement, et disposé au-dessus de la machine, caractérisée par le fait que la paroi (14) du carter de transfert (10) qui est opposée à l'extrémité délivreuse (9) de la vis sans fin collectrice (8) est reliée amoviblement aux parois du carter de transfert (10) qui lui correspondent; et par le fait que les convoyeurs de transfert (12) sont reliés par leurs moyeux d'entraînement (19) dans la zone du fond du carter de transfert (10), par l'intermédiaire d'accouplements (17), et sont remplaçables par des cylindres disperseurs (20) de manière à procéder, sélectivement, à la dispersion large du produit haché, à son andainage ou à sa délivrance à un véhicule accompagnateur.

2. Récolteuse de betteraves selon la revendication 1, caractérisée par le fait que la paroi (14) est reliée, aux parois du carter de transfert (10) qui lui correspondent, avec faculté de rotation d'un côté et de verrouillage.

3. Récolteuse de betteraves selon les revendications 1 et 2, caractérisée par le fait que les éléments de verrouillage (16) libèrent la paroi avec effet d'autodéclenchement lorsqu'il règne une surpression dans le carter de transfert (10).

4. Récolteuse de betteraves selon la revendication 1, caractérisée par le fait que les extrémités supérieures respectives des convoyeurs de transfert (12) ou des cylindres disperseurs (20) sont montées flottantes.

5. Récolteuse de betteraves selon les revendications 1 et 4, caractérisée par le fait que les cylindres disperseurs (20) présentent des organes d'entraînement hélicoïdaux sur toute leur longueur.

6. Récolteuse de betteraves selon les revendications 1 et 4, caractérisée par le fait que les cylindres disperseurs (20) présentent des organes d'entraînement (21) du type fourchons, répartis sur toute leur longueur.

7. Récolteuse de betteraves selon les revendications 1 et 4, caractérisée par le fait que les cylindres disperseurs présentent des organes d'entraînement (21) du type fléaux, répartis sur toute leur longueur.

*Fig. 1*

*Fig. 2*

Fig. 3

Fig. 4